# EUROPEAN PATENT SPECIFICATION

(11) **EP 0 697 330 B1**
(45) Date of publication and mention of the grant of the patent: **07.05.1997**
(21) Application number: 95112144.1
(22) Date of filing: 02.08.1995
(51) Int. Cl.: B62M 23/02

(54) **Electrically assisted bicycle**
Fahrrad mit elektrischem Hilfsmotor
Bicyclette assistée par un moteur électrique

(30) Priority: 18.08.1994 JP 194448/94
(43) Date of publication of application: 21.02.1996
(73) Proprietor: HONDA GIKEN KOGYO KABUSHIKI KAISHA, Minato-ku Tokyo (JP)
(72) Inventor: Ogawa, Sumitaka, c/o K.K. Honda Gijutsu Kenkyusho, Wako-shi, Saitama (JP)
(74) Representative: Liska, Horst, Dr.-Ing.

(56) References cited:
- EP-A- 0 635 423
- JP-A- 5 310 177

## Description

The present invention relates to an electrically assisted bicycle which utilizes electric power output by a motor as a supplement to human power for pedaling the bicycle in accordance with the preamble of claim 1. In particular, the present invention relates to an electrically assisted bicycle wherein a circuit for inhibiting the driving by a motor in a state of not applying a pedal working force, referred to hereafter as a pedaling force, is provided independently of a main control system for controlling the operation of the motor in accordance with a detected pedal working force so that the driver does not lose the sense of driving the bicycle even if the function of the main control circuit becomes abnormal.

In an electrically assisted bicycle wherein the output of an electric-power based driving system provided along with a human-power based driving system is controlled in accordance with variations in pedaling force, the operation of a moving part of a pedaling-force detecting means is not smooth. When the pedaling force exceeds a reference value set in advance for a period longer than a predetermined time, the electric-power based driving system is prevented from generating an excessive output by limiting the output thereof. In this way, the deterioration of the driving sense can be avoided. A technique for preventing the driving sense from worsening in the way described above is disclosed in Japanese Patent Laid-open No. HEI5-310177.

When the function of a main control system for controlling the operation of a motor for generating a supplementary electric power based on a detected pedaling force becomes abnormal even if the pedaling-force detecting means itself works normally, there is the possibility of the motor's supplying an unnecessary driving power inevitably, causing the driver to lose the driving sense.

The present invention addresses the problems described above. It is an object of the present invention to provide an electrically assisted bicycle that limits the operation of a motor in a state with the pedals not worked so as to, by all means, prevent an unnecessary supplementary power from being generated even in the event of an abnormal function of a main control system comprising, among other components, a CPU.

In order to solve the problems described above, the electrically assisted bicycle is provided with the features in the characterizing part of claim 1.

Since the motor-driving limiting means is provided independently of the main control system for controlling the operation of the motor in accordance with a detected pedaling force, even in the event of an abnormal function of the main control system resulting in, for example, an output to drive the motor regardless of the value of the detected pedaling force, the operation of the motor is limited as long as the pedaling-force detecting means does not detect that a pedaling force has been applied.

Accordingly, a supplementary electric power is by no means supplied by the motor when the pedals are not being worked even if the function of the main control system becomes abnormal, requiring such a supplementary electric power. As a result, the driver never loses the driving sense.

The present invention will become apparent from the following detailed description of preferred embodiments with reference to accompanying diagrams:
Fig. 1 is a diagram showing a side view of an electrically assisted bicycle provided by the present invention;
Fig. 2 is a diagram showing a vertical cross section of a battery case;
Fig. 3 is a diagram showing a vertical side cross section of the rear part of the battery case and the lower part of a center case;
Fig. 4 is a model diagram showing structures of a transmission gear mechanism and a pedaling-force detecting means;
Fig. 5 is a block diagram showing the configuration of a control system;
Fig. 6 shows time charts showing the operation of a motor-driving limiting means; and
Fig. 7 is a diagram showing a circuit configuration of an actual example of the control system.

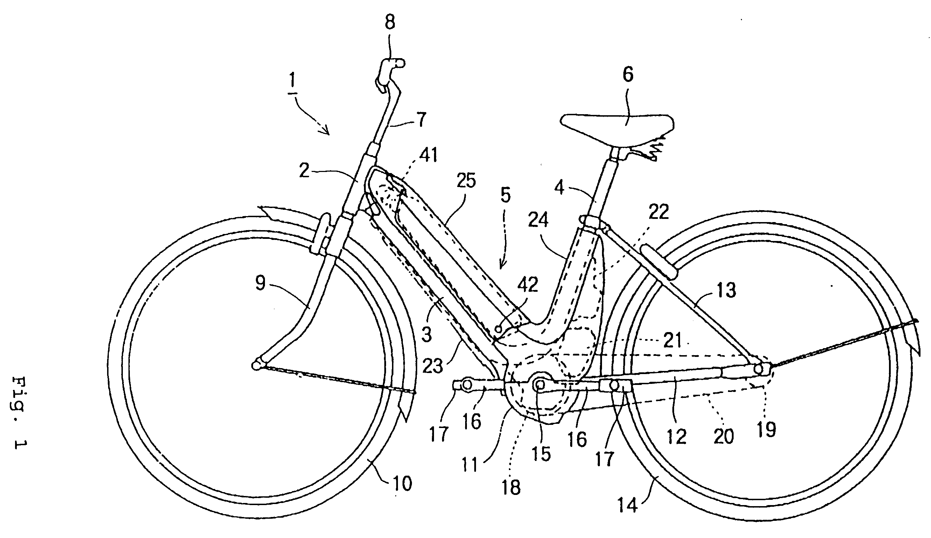

Fig. 1 is a diagram showing a side view of an electrically assisted bicycle provided by the present invention. As shown in the figure, a down tube 3 is extended from a head pipe 2 of the electric-power supplemented bicycle 1 in a slanting backward-downward direction. The lower end of the down tube 3 is bent in a slanting backward-upward direction and a seat tube 4 is extended from the lower end of the down tube 3. The down tube 3 and the seat tube 4 form a main frame 5 which has a shape resembling all but the V character. A seat 6 is provided on the upper end of the seat tube 4.

A steering shaft 7 is inserted into the head pipe 2 in such a way that the steering shaft 7 can be rotated freely. A steering handle 8 is mounted on the upper end of the steering shaft 7 to form an assembly with the steering shaft 7 which assembly also includes a pair of right and left forks 9 extended from the lower end of the steering shaft 7. The axis of a front wheel 10 is attached to the lower ends of the right and left forks 9 in such a way that the front wheel 10 can rotate freely around the axis.

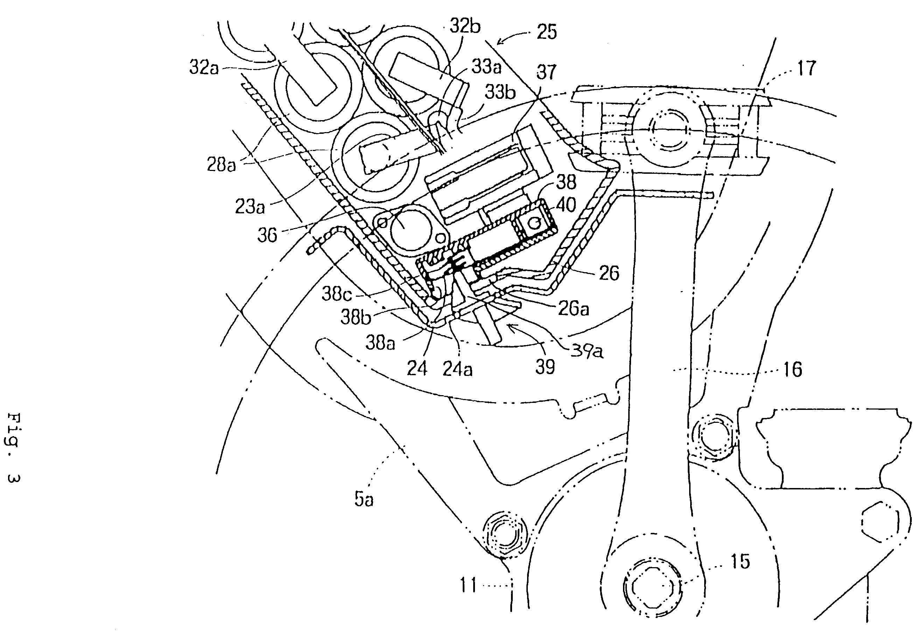

A downward protruding bracket 5a shown in Fig. 3 is provided on the lower part of the bent portion of the main frame 5, a cross-portion of the down tube 3 and the seat tube 4. A gear box 11 accommodating a transmission gear mechanism as well as serving as a crank case is mounted on the bracket 5a to form an assembly with the bracket 5a. The assembly also includes a rear fork 12 oriented in the longitudinal direction of the electrically assisted bicycle 1 with the front end of the rear fork 12 fixed to the gear box 11. A stay 13 is suspended between the rear end of the rear fork 12 and the seat tube 4. The axis of a rear wheel 14 is attached to the rear end of the rear fork 12 in such a way that the rear wheel 14 can rotate freely around the axis.

A crank shaft 15 is held by the gear box 11 in such a way that the crank shaft 15 can rotate freely. Crank arms 16 are fixed to the right and left ends of the crank shaft 15 to from a crank-shaft assembly. A pedal 17 is provided at the end of each of the crank arms 16.

An endless chain 20 is suspended on a driving sprocket 18 fixed on the crank shaft 15 as part of the crank-shaft assembly and on a driven sprocket 19 fixed on the rear wheel 14 as an assembly. When the crank shaft 15 is driven to rotate by pedaling forces applied to the pedals 17, the pedaling forces are passed on to the rear wheel 14 to also rotate the rear wheel 14 through the driving sprocket 18, the endless chain 20 and the driven sprocket 19. As a result, the electrically assisted bicycle 1 can be driven as an ordinary bike.

Furthermore, a driving motor 21 is fixed on the gear box 11 in a direction parallel to the seat tube 4. A control apparatus 22 is installed on the back-side surface of the seat tube 4 above the driving motor 21. The control apparatus 22 comprises, among other components, an electronic control unit and a motor driver for controlling the rotation of the driving motor 21. As the driving motor 21 rotates under the control of the control apparatus 22, a rotation torque output by the driving motor 21 is transmitted to the crank shaft 15 through the transmission gear mechanism, causing the electric power output by the driving motor 21 to supplement the human power.

As described earlier, the down tube 3 on the left side and the seat tube 4 on the right side, which form the main frame 5 with a shape resembling the V character, are veiled by a side cover 23 and a center cover 24 respectively. A long battery case assembly 25 is mounted on the upper surface of the inclined side cover 23 for veiling the down tube 3 in such a way that the battery case assembly 25 can be removed with ease.

A main switch 41 comprising key switches ( combination switches) and the like is provided at the front end of the side cover 23. It should be noted that the battery case assembly 25 is put in such a structure that, when the main switch 41 is set to an ON position, a lock apparatus interlocked with the operation of the main switch 41 makes the battery case assembly 25 unremovable. Note that the lock apparatus itself is not shown in the figure.

In addition, a connection unit 42 comprising a charging connector and the like is provided on a side surface of the battery case assembly 25, allowing the battery to be charged even with the battery case assembly 25 mounted on the electrically assisted bicycle 1 as it is.

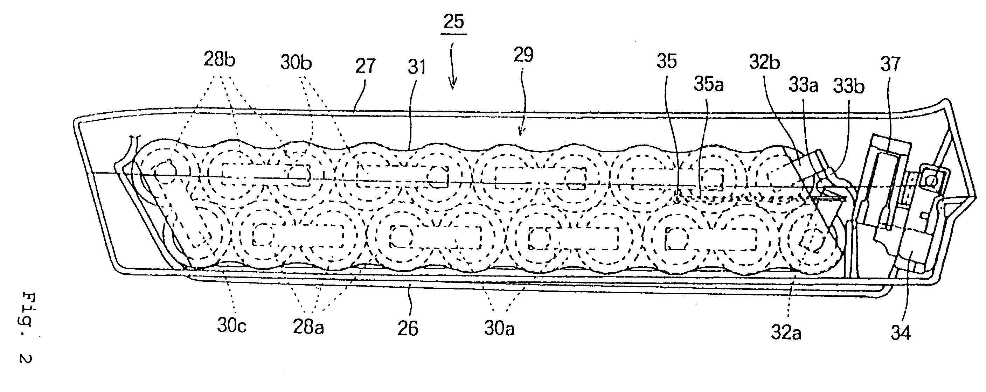

Fig. 2 is a diagram showing a vertical cross section of the battery case assembly 25.

As shown in the figure, the battery case assembly 25 is divided into a lower case 36 on the lower side and an upper case 27 on the upper side. The battery case assembly 25 contains a power-supply battery set 29 comprising a row of ten lower battery cells 28a and a row of ten upper battery cells 28b. The battery cells 28a and 28b are each a cylindrical single-type Ni-Cd (Nickel-Cadmium) battery cell. The power-supply battery set 29 can be removed from the battery case assembly 25 with ease.

In addition, the upper case 27 of the battery case assembly 25 is part of the external surface of the body of the electric-power supplemented bicycle 1.

The power-supply battery set 29 has the following configuration. Two adjacent Ni-Cd battery cells 28a have their positive and negative poles placed alternately. The ten Ni-Cd battery cells 28a are arranged in such a way that their outer surfaces come into contact with each other into a lower row perpendicular to the center lines of the Ni-Cd battery cells 28a. In each upper dent between two adjacent Ni-Cd battery cells 28a on the lower row, an upper Ni-Cd battery cell 28b is laid down in such a way that the ten Ni-Cd battery cells 28b form an upper row above the lower row. The positive pole of a Ni-Cd battery cell 28a on the lower row is connected to the negative poles of the two Ni-Cd battery cells 28a adjacent thereto by connection plates 30a, each shown as a dashed-line square in Fig. 2, by soldering both ends of the connection plate 30a to the positive and negative poles of two adjacent Ni-Cd battery cells 28a. Similarly, connection plates 30b are each used for connecting the positive and negative poles of two adjacent upper Ni-Cd battery cells 28b. The negative pole of an Ni-Cd battery cell 28a and the positive pole of an Ni-Cd battery cell 28b at the front ends of the lower and upper rows respectively, or the left ends shown in the figure, are connected to each other by a connection plate 30c. The lower and upper Ni-Cd battery cells 28a and 28b are inserted into a cylindrical film 31 made of thermally shrinking compound resin. The thermally shrinking compound resin cylindrical film 31 is then shrunk by heating it.

A connection plate 32a connected to the positive pole of an Ni-Cd battery cell 28a at the rear end of the lower row, or the right end shown in the figure, is assembled with a lead 33a by soldering one end of the lead 33a to the connection plate 32a. Likewise, a connection plate 32b connected to the negative pole of an Ni-Cd battery cell 28b at the rear end of the upper row, or the right end shown in the figure, is assembled with a lead 33b by soldering one end of the lead 33b to the connection plate 32b. The other ends of the leads 33a and 33b are connected to an electric-power supplying connector 34 through which electric-power is supplied to the control apparatus 22. For details of connections between the connection plate 32a and the lead 33a as well as the connection plate 32b and the lead as 33b, refer to Fig. 3.

A thermally sensitive resistor element 35 such as a thermistor is provided between the Ni-Cd battery cells 28a on the lower row and the Ni-Cd battery cells 28b on the upper row. The thermally sensitive resistor element 35 is connected to an electric-power charging connector 36 shown in Fig. 3 through a lead 35a. When charging the Ni-Cd battery cells 28a and 28b by a charger not shown in the figure, the charger can monitor the temperature of the Ni-Cd battery cells 28a and 28b by measuring the resistance of the thermally sensitive resistor element 35.

In addition, the battery case assembly 25 also includes a variety of fuses 37 and circuit components such as diodes for preventing a charging voltage from being applied at an inverse polarity. It should be noted that the circuit components themselves are not shown in the figure.

Fig. 3 is a diagram showing a vertical side cross section of the rear part of the battery case assembly and the lower part of a center case.

An electric-power supplying connector 38 is provided at the rear end of the battery case assembly 25. The electric-power supplying connector 38 has a pair of right and left contactor terminals 38a made of a conductive and elastic material such as a copper alloy plate. Each of the contactor terminals 38a is fixed to a connector case by securing one of its end using a screw 40 and also connected electrically to the leads 33a and 33b. A connector 39, a counterpart of the electric-power supplying connector 38, is provided on a bottom wall 24a of the center cover 24. The connector 39 has a pair of protruding rod terminals 39a on the right and left sides. With the battery case assembly 25 mounted, the protruding rod terminals 39a are inserted into an opening 26a formed on a lower case 26 and an opening 38b on the electric-power supplying connector 38 respectively until the edges of the protruding rod terminals 39a come into contact with the contactor terminals 38a. With such an arrangement, electric power can be supplied from the battery cells 28a and 28b. The other ends of the contact terminals 38a are pushed up by the protruding rod terminals 39a by a displacement against the forces of coil springs 38c provided on the displaced portions. With such a mechanism, sufficient contact pressures are obtained, making interruption of the supply of electric power difficult to occur which interruption is caused by vibration or the like generated while the electric-power supplemented bicycle 1 is running.

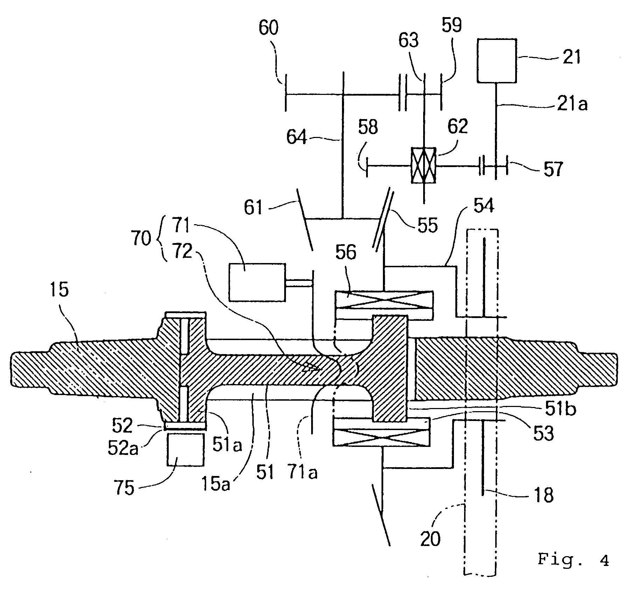

Fig. 4 is a model diagram showing structures of the transmission gear mechanism and the pedaling-force detecting means.

In the longitudinal mid of the crank shaft 15, a through hole 15a which is extended in the axial direction and penetrates in the radial direction is formed. A torsion bar 51 having the same axis as the crank shaft 15 is accommodated inside the through hole 15a. A head 51a formed at the left end (or the input end) of the torsion bar 51 is linked to the crank shaft 15 through a collar 52. A head 51b formed at the right end (or the output end) of the torsion bar 51 is, on the other hand, attached by pressure to a groove formed on the inner circumference of a driving member 53 having a shape resembling a ring. Wall surfaces of the through hole 15a of the crank shaft 15 facing each other are bent in such a way that their cross sections each form approximately a circular arc, allowing for a rotation of the torsion bar 51 by a predetermined angle relative to the head 51b on the free end side thereof and, at the same time, preventing the torsion bar 51 from being ruptured by an excessively big load applied thereto.

A first unidirectional clutch 56 is provided between a bevel gear 55 fixed on the inside perimeter of a sleeve 54 and the ring-shaped driving member 53. When forces are applied to the pedals 17 not shown in the figure to rotate the crank shaft 15 in the forward direction, a torque output by the crank shaft 15 is transmitted to the driving sprocket 18 spline-connected to the outer circumference of the sleeve 54 through the torsion bar 51, the ring-shaped driving member 53, the bevel gear 55 and the sleeve 54. The torque is then transmitted to rear wheel 14 through the endless chain 20 and the driven sprocket 19 shown in Fig. 1. When forces are applied to the pedals 17 not shown in the figure to rotate the crank shaft 15 in the backward direction, on the other hand, the first unidirectional clutch 56 slips, allowing the crank shaft 15 to rotate in the backward direction.

When the driving motor 21 is driven to rotate, a torque produced by an output shaft 21a thereof is transmitted to the driving sprocket 18 through four super gears 57, 58, 59 and 60, the bevel gear 55 and another bevel gear 61. A second unidirectional clutch 62 is provided on a first intermediate shaft 63 for avoiding a hindrance to rotation of the driving sprocket 18 driven by human power even when the driving motor 21 is at a standstill. It should be noted that reference numeral 64 denotes a second intermediate shaft.

The pedaling-force detecting means 70 comprises a torque-into-displacement converting means 71 for converting a twist caused by a pedaling force (or a torque) into a displacement in the axial direction and a stroke sensor 72 for outputting an electrical signal representing the displacement. The torque-into-displacement converting means 71 is configured to include engagement of a protruding cam surface formed on the end surface of a slider-inner 71a rotating along with the crank shaft 15 as an assembly with a dented cam surface formed on the end surface of the driving member 53.

In order to detect the rotational speed of the crank shaft 15, a tooth unit 52a is formed on the outer circumference of the collar 52 connecting the crank shaft 15 to the head 51a of the torsion bar 51. A crank-shaft speed sensor 75 is provided at a location exposed to the tooth unit 52a. The crank-shaft speed sensor 75 is designed to output detection pulses resulting from optical or magnetic detection of the tooth unit 52a.

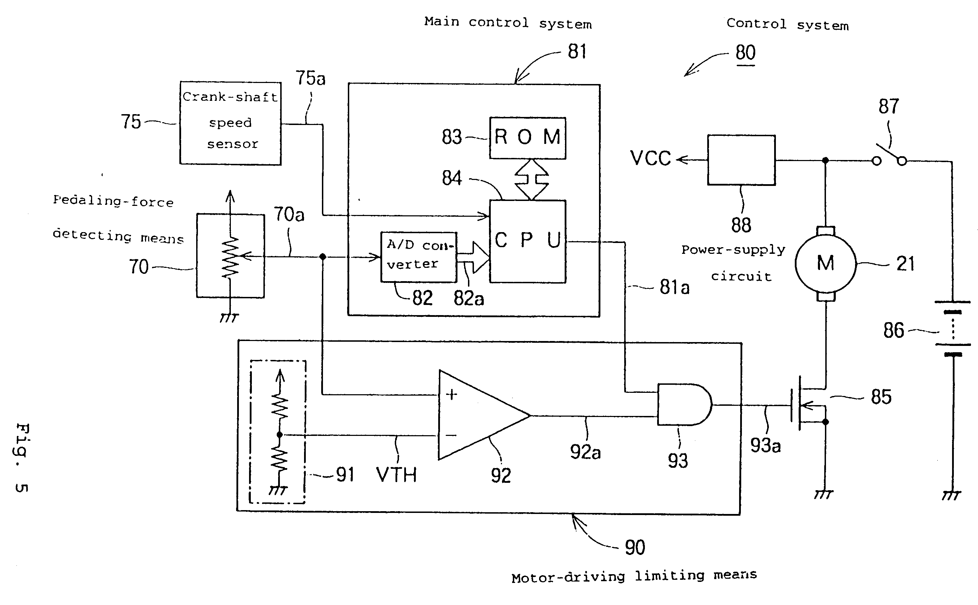

Fig. 5 is a block diagram showing the configuration of a control system 80.

The control system 80 comprises a main control system 81 and a motor-driving limiting means 90 which is installed independently of the main control system 81. Based on a detection signal 70a output by the pedaling-force detecting means 70 and a signal 75a representing the rotational speed of the crank shaft 15 detected by the crank-shaft speed sensor 75, the main control system 81 outputs a motor driving signal 81a. The motor-driving limiting means 90 limits the operation of the driving motor 21 when the detection signal 70a output by the pedaling-force detecting means 70 goes below a threshold value set in advance without regard to the motor driving signal 81a.

The main control system 81 comprises a A/D converter 82 for converting the detection signal 70a output by the pedaling-force detecting means 70, a voltage signal, into a digital value representing the voltage signal, and a CPU 84 for executing operations based on a control program stored in a ROM unit 83. The CPU 84 reads in pedaling-force data 82a resulting from the A/D conversion as well as monitors the rotational speed of the crank shaft 15 from, among other information, the pulse period of the signal 75a which represents the rotational speed of the crank shaft 15. A conduction ratio per unit time or the so-called duty cycle of the driving motor 21 appropriate for the pedaling-force data 82a and the rotational speed of the crank shaft 15 is then found by the CPU 84 by referring to a PWM map prepared in advance or by using formulas prepared in advance. The CPU 84 finally outputs the motor driving signal 81a, a signal undergoing PWM modulation based on the conduction ratio or the duty cycle found above.

The motor-driving limiting means 90 comprises a threshold-voltage generating means 91, a voltage comparator 92 and a logical-product circuit (or an AND gate) 93. The voltage comparator 92 compares the detection signal 70a output by the pedaling-force detecting means 70 to a threshold voltage VTH generated by the threshold-voltage generating means 91, outputting a motor-operation-permit / restriction-command signal 92a. If the detection signal 70a is found greater than the threshold voltage VTH, the signal 92a is set at a high level to allow the driving motor 21 to operate. If the detection signal 70a is found smaller than the threshold voltage VTH, on the other hand, the signal 92a is set at a low level to restrict the operation of the driving motor 21. The PWM modulated motor driving signal 81a is supplied to one of the input pins of the logical-product circuit (AND gate) 93 whereas the motor-operation-permit / restriction-command signal 92a is fed to the other input pin thereof. A signal 93a output by the logical-product circuit (AND gate) 93 is used to drive the switching operation of a power field-effect transistor employed in a motor driver 85.

It should be noted that reference numerals 86 and 87 shown in Fig. 5 denote a battery power supply and a main switch respectively whereas reference numeral 88 is a regulated power supply of the voltage-drop type for providing a regulated power supply VCC to a variety of circuit elements.

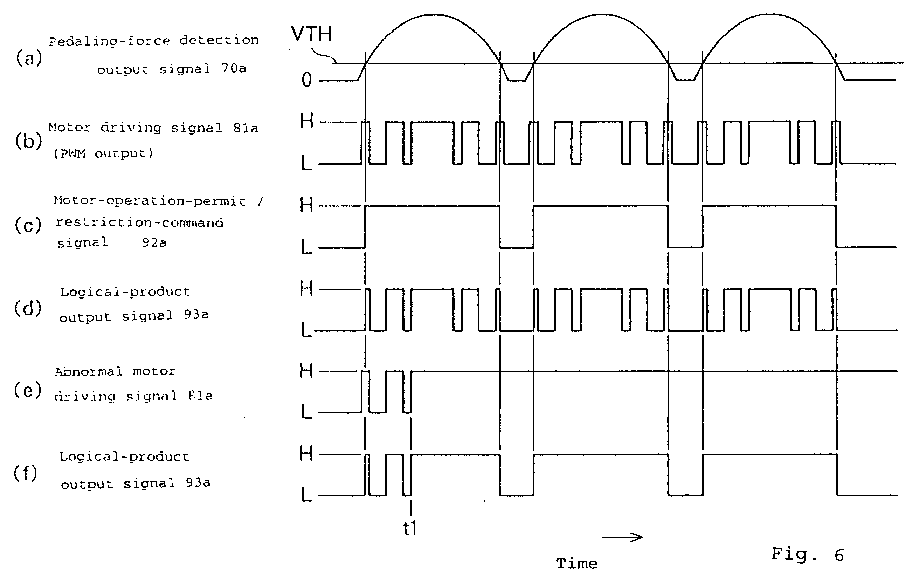

Fig. 6 shows time charts showing the operation of the motor-driving limiting means 90.

When the pedals of a bike are being worked, at upper and lower dead centers, the pedaling forces are not applied. Therefore, the detection signal 70a output by the pedaling-force detecting means 70 is a voltage waveform appearing as periodically repeated hills and valleys as shown in Fig. 6 (a). The voltage comparator 92 sets the signal 82a at a H (high) level during periods in which the pedaling-force detection signal 70a is greater than the threshold voltage VTH as shown in Fig. 6 (c). Accordingly, when the main control system 81 outputs a motor driving signal 81a, a PWM signal, in accordance with the pedaling-force detection signal 70a as shown in Fig. 6 (b), the logical-product circuit (or an AND gate) 93 passes on the motor driving signal 81a to the output thereof as a logical-product output signal 93a as shown in Fig. 6 (d) which logical-product output signal 93a is used for controlling the operation of the driving motor 21. That is to say, only during a period in which the pedaling-force detection signal 70a is greater than the threshold voltage VTH is the operation of the driving motor 21 allowed for supplying supplementary electric power.

Assume that the main control system 81 does not function normally any more after, for example, a point of time t1 for some reasons as shown in Fig. 6 (e). Even if the motor driving signal 81a is kept at a H (high) level after the point of time t1 due to the abnormal operation of the main control system 81, the operation of the driving motor 21 is enabled only during periods in which the pedaling-force detection signal 70a is greater than the threshold voltage VTH as shown in Fig. 6 (f). As a result, supplementary electric power is by no means supplied by the driving motor 21 when the pedals are not being worked even if the operation of the main control system 81 becomes abnormal, requiring such supplementary electric power.

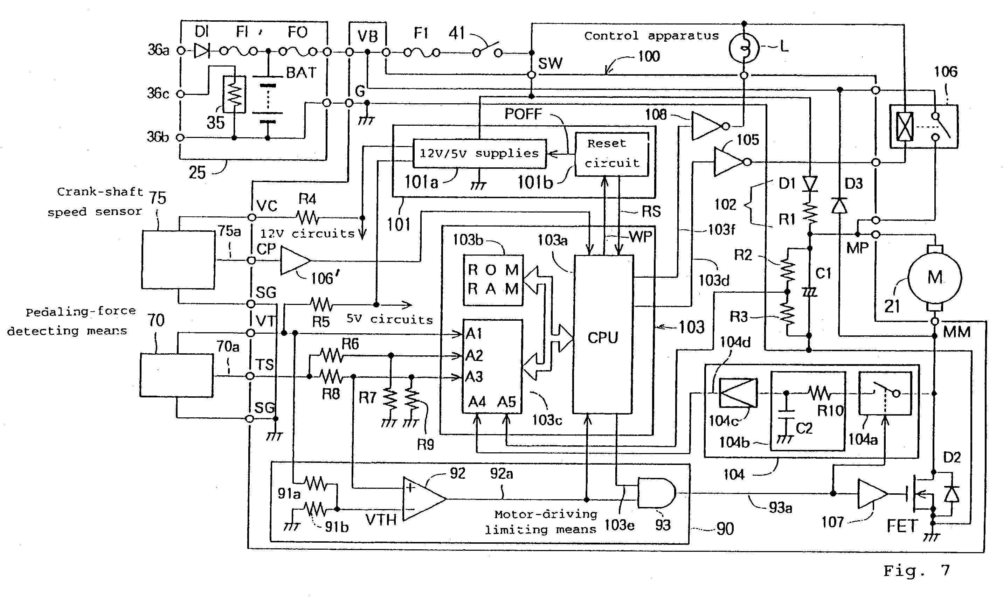

Fig. 7 is a circuit configuration diagram showing an actual example of the control system 80.

Electric power supplied by a battery power supply BAT in the battery case assembly 25 is applied from pins B+ and B- of the electric-power supplying connector 38 to power-supply pins B+ and B- of a control apparatus 100 through a fuse FO on the power-supplying side. It should be noted that electric power is charged from a pin 36a on the positive-pole side of the electric-power charging connector 36 through a diode DI and a fuse FI on the power-charging side. One end of the thermally sensitive resistor element 35 for monitoring the temperature of the battery during electric charging is connected to a pin 36b on the negative-pole side of the electric-power charging connector 36 while the other end thereof is connected to a signal pin 36c.

When the main switch 41 is set to the ON position, electric power of the battery power supply BAT is supplied from a power-supply pin VB on the positive-pole side of the control apparatus 100 to a power-supply and reset circuit 101 through the fuse FO, the main switch 41 and a pin SW and, at the same time, a condenser C1 for regulating a motor power supply is charged through a charge circuit 102 comprising a diode D1 and a charging-current limiting resistor R1.

The power-supply and reset circuit 101 comprises 12V and 5V power supplies 101a for supplying power at regulated voltages of 12V and 5V respectively through voltage drops from the battery power supply BAT of typically 24V and a reset circuit 101b driven by the 5V power supply. The 12V power supply is applied to the crank-shaft speed sensor 75 and used as a voltage for controlling the gate of the power field-effect transistor (FET) which, in turn, controls the conduction of current flowing into the driving motor 21. The 5V power supply is, on the other hand, used for supplying electric power to, among other components, a single-chip microcomputer 103, the motor-driving limiting means 90 and a motor-current detecting circuit 104.

The reset circuit 101b transmits a reset pulse RS to the CPU 103a at the build-up time of the 5V power supply and also monitors watch-dog pulses WP output by the CPU 103a at predetermined intervals. If a watch-dog pulse WP is not detected by the reset circuit 101b for more than a predetermined period of time, the reset circuit 101b outputs a reset pulse RS, resetting (or initializing) the CPU. In addition, if the supply of the watch-dog pulses WP is not resumed even after the reset pulse RS has been output, the reset circuit 101b transmits a 12V/5V-power-supply cut-off command POFF to the 12V and 5V power supplies 101a to terminate the supplying of the 5V and 12V power.

The functions of the main control system are implemented by the single-chip microcomputer 103 embedding, among other components, a CPU 103a, a ROM/RAM unit 103b, an A/D converter 103c and a timer which is not shown in the figure.

Resistors R2 and R3 connected in series between the terminals of the condenser C1 regulating the motor power supply are used as a potentiometer for dividing the voltage of the condenser C1 to provide a voltage in an allowable input voltage range of the A/D converter 103c. A divided voltage output by the potentiometer is supplied to an input pin A5 of the A/D converter 103c. Receiving a reset pulse RS, the CPU 103a carries out initialization. Thereafter, the CPU 103a outputs a relay driving command 103d at a time a value resulting from A/D conversion of the divided voltage exceeds a voltage set in advance. The relay driving command 103d is supplied to a relay driving circuit 105 which, in turn, provides a current to an exciting winding employed in a relay 106. As the exciting winding conducts, contacts of the relay 106 are put in a closed state, applying electric power generated by the battery power supply BAT to the driving motor 21.

The control system 80 is designed so that a voltage appearing at the pins of the condenser C1 for regulating the motor power supply is monitored and the contacts of the relay 106 are put in a closed state only after the condenser C1 has been charged. As a result, no excessive charging current flows through the contacts of the relay 106, which excessive charging current would otherwise damage the contacts. It should be noted that the control system 80 can also be designed so that the relay 106 is actuated when the charging of the condenser C1 is judged to have been completed at the time the rate per unit time of the increase in voltage appearing at the pins of the condenser C1 becomes smaller than a predetermined value. The judgment based on the rate of change in voltage allows completion of the charging to be detected without regard to the voltage of the battery power supply BAT.

When the field-effect transistor (FET) for controlling the flow of current to the driving motor 21 becomes bad due to a shorted connection between the drain and the source thereof or a diode D2 connected in parallel to the drain and the source for absorbing a reversed surge voltage developed between the drain and the source becomes bad because of a short-circuit junction therein, the potential between the pins of the condenser C1 becomes equal to a divided voltage output by a potentiometer across the battery voltage comprising a charging-current limiting resistor R1 and the resistance of the winding of the driving motor 21. By the way, the resistance of the charging-current limiting resistor R1 has a value sufficiently greater than that of the winding of the driving motor 21. Accordingly, in the event of a short-circuit failure described above, the voltage between the pins of the condenser C1 will not rise due to charging, inhibiting the actuation of the relay 106. As a result, an excessive current caused by such a short-circuit failure can be prevented in advance from being supplied.

In addition, the CPU 103a monitors the voltage between the pins of the condenser C1 even while the driving motor 21 is rotating, adjusting the conduction ratio (duty cycle) of the PWM signal 103e so as to provide a desired supplementary torque based on the actual voltage applied to the driving motor 21. As a result, the desired torque can be generated even if the voltage of the battery power supply BAT becomes low.

The control system 80 is designed so that a surge voltage with a reversed polarity generated when stopping the current flowing to the driving motor 21 is absorbed by the battery power supply BAT through a diode D3. The fuse FO on the power-supplying side is a large-current fuse having a current withstanding capacity of several tens of amperes. Since electric power is supplied to the driving motor 21 through the contacts of the relay 106, the main switch 41 having a small current withstanding capacity and a fuse F1 with a small current withstanding capacity of several amperes connected in series with the main switch 41 can be employed.

12V power is supplied to the crank-shaft speed sensor 75 through a bleed resistor R4. A short-circuit failure may occur in the crank-shaft speed sensor 75 rather than at a terminal VC. In the event of such a short-circuit failure, a short-circuit current is limited by the bleed resistor R4, allowing the 12V power supply system to be protected. The signal 75a supplied to a terminal CP to represent the rotational speed of the crank shaft 15 undergoes a waveform shaping process at a waveform shaping circuit 106' for outputting a signal having a logic amplitude of the 5V system. The signal output by the waveform shaping circuit 106' is then supplied to an input terminal of the CPU 103a.

5V power is supplied to the pedaling-force detecting means 70 through a bleed resistor R5. A short-circuit failure may occur in the pedaling-force detecting means 70 rather than at a terminal VT. In the event of such a short-circuit failure, a short-circuit current is limited by the bleed resistor R5, allowing the 5V power supply system to be protected. The pedaling-force detection signal 70a, a voltage signal supplied to a terminal TS, is divided by two potentiometers having voltage ratios different from each other. The divided voltages output by the potentiometers are supplied to the A/D converter 103c. One of the potentiometers comprises resistors R6 and R7 to provide a typical voltage ratio of 1/2 whereas the other potentiometer comprises resistors R8 and R9 to provide a typical voltage ratio of 1/4.

The CPU 103a takes in a detected torque represented by the pedaling-force detection signal 70a as two signals: the two divided voltages from the potentiometers which are each converted into digital data by the A/D converter 103c. In the case of a small detected torque, the digital data resulting from the A/D conversion of the divided voltage output by the potentiometer having the 1/2 voltage ratio and supplied to an A/D input terminal A2 is selected. In the case of a large detected torque, on the other hand, the digital data resulting from the A/D conversion of the divided voltage output by the potentiometer having the 1/4 voltage ratio and supplied to an A/D input terminal A3 is selected. In this way, the detected torque is converted into digital data by taking the voltage ratios into consideration. Such a configuration and processing allow a torque to be detected with a high degree of accuracy over a wide range of small to large torque values even without the necessity to raise the resolution of the A/D converter 103c.

Since the detection signal 70a output by the pedaling-force detecting means 70 is affected by the voltage of the power supply supplied thereto, the voltage of the power supply actually fed to the pedaling-force detecting means 70 is also input to the A/D converter 103c through an A/D input terminal A1 to be converted into digital data as well. The digital data resulting from the A/D conversion is then used for compensating the detection signal 70a for the effect of the voltage of the power supply on the detection signal 70a. In this way, the pedaling force can be detected with an even higher degree of accuracy.

The voltage comparator 92 employed by the motor-driving limiting means 90 compares the threshold voltage VTH, a divided voltage generated by a potentiometer comprising resistors 91a and 91b for dividing the voltage of the power supply applied to the pedaling-force detecting means 70, to a divided voltage generated by a potentiometer comprising resistors R8 and R9 for dividing the pedaling-force detection signal 70a. Since the threshold voltage VTH obtained by dividing the voltage of the power supply applied to the pedaling-force detecting means 70 is constant, it is possible to determine whether or not the pedaling force (torque) exceeds a predetermined value with a high degree of accuracy.

A signal 92a output by the voltage comparator 92 is supplied to the CPU 103a through an input terminal thereof. The CPU 103a monitors the periodical generation of L (low) level of the signal 92a output by the voltage comparator 92 which indicates that the pedaling force is in a zero state. If the zero state of the pedaling force is not detected periodically while the operation of the driving motor 21 is being controlled by pedaling-force detection based on A/D converted data, the operation to output the PWM signal 103e is ended to terminate the operation of the driving motor 21. In this way, an unnecessary torque can by all means be prevented from being generated whenever the operation of the pedaling-force detection system such as the pedaling-force detecting means 70 or the A/D converter 103c becomes abnormal, requiring such a torque.

Based on information on the pedaling force received through the A/D converter 103c and the signal 75a representing the rotational speed of the crank shaft 15, the CPU 103a searches a PWM duty map for a duty cycle of the PWM signal 103e generated and output thereby.

The PWM signal 103e is passed on to an FET driving circuit 107 by the logical-product circuit 93 as long as the signal 92a output by the comparator 92 is sustained at a high level or, in other words, as long as the detected pedaling force is greater than a predetermined value. The FET driving circuit 107 provides electric power to the gate of the field-effect transistor (FET) in accordance with a signal 93a output by the logical-product circuit 93, switching the field-effect transistor (FET) on and off. As a result, the driving motor 21 is run under PWM control.

The CPU 103a also monitors the motor current to determine whether or not the driving motor 21 is running normally. If an abnormal motor current is detected, the operation of the driving motor 21 is limited.

When the driving motor 21 is conducting, a voltage referred to hereafter as an FET-on voltage, appears between the drain and the source of the field-effect transistor FET. The magnitude of the FET-on voltage is equal to the product of the current flowing to the driving motor 21 and an on-resistance of the field-effect transistor FET.

An electronic switch 104a employed by a motor-current detecting circuit 104 is turned on synchronously with the H (high) level of the signal 93a output by the logical-product circuit 93, supplying the FET-on voltage to a time-constant circuit 104b comprising a resistor R10 and a condenser C2. The electronic switch 104a can be designed using a bipolar transistor or a field-effect transistor. The voltage of the capacitor C2 resulting from the supplying of the FET-on voltage to the time-constant circuit in synchronization with the PWM signal is a nearly-direct-current voltage (ripple voltage) having a time constant determined by the time-constant circuit. The nearly-direct-current voltage (ripple voltage) is direct-current amplified by a voltage amplifier 104c into a voltage signal 104d which is supplied to the A/D converter 103c through an A/D conversion input terminal A4. The ripple voltage is converted into digital data representing the motor current, which data is used by the CPU 103a to determine whether or not the motor current is excessive. If the motor current is found excessive, the conduction duty cycle is set to a low value to terminate the operation of the driving motor 21.

It should be noted that the motor current can also be monitored by connecting a resistor for current monitoring in series with the field-effect transistor (FET) and measuring a voltage drop between the ends of the current monitoring resistor. In this embodiment, none the less, the FET-on voltage is detected, eliminating a loss that would otherwise be incurred in the current monitoring resistor. As a result, the battery power supply BAT can be used with a high degree of efficiency.

In addition, the CPU 103a also compares data representing the voltage of the battery power supply BAT input through the A/D converter 103c to a residuum criterion voltage set in advance. If the voltage of the battery power supply BAT is found lower than the residuum criterion voltage, a display signal 103f is output to a lamp driving circuit 108 to turn the lamp L on, urging charging of the battery. It should be noted that the lamp L can also be turned on and off instead of being turned on continuously in order to save electric power. In this case, the lamp L is turned on and off intermittently at a period of typically several seconds.

In the description given above, the control system implemented by this embodiment is designed so that, during a period in which the pedaling force is found smaller than a predetermined value, the transmission of a motor driving signal output by the CPU is cut off by means of a logical-product circuit (AND gate). It should be noted, however, that as an alternative, the operation of the driving motor can also be limited by cutting off the supply of electric power to the gate of the field-effect transistor controlling the conduction of current flowing through the driving motor.

As described above, the present invention provides an electrically assisted bicycle wherein a motor-driving limiting means for limiting the driving by a motor in a state of not applying a pedaling force is provided independently of a main control system for controlling the operation of the motor so that, when the pedals are not being worked, the motor does not supply supplementary electric power, allowing the driver to keep the sense of driving the bicycle even if the operation of the main control circuit becomes abnormal, requiring such supplementary electric power.

In summary, the present invention prevents unnecessary supplementary driving electric power from being generated even when the operation of a main control system employing, among other components, a CPU becomes abnormal, requiring the supply of such unnecessary supplementary electric power.

Based on a detection signal 70a output by a pedaling-force detecting means 70 and a signal 75a representing the rotational speed of a crank shaft 15 detected by a crank-shaft speed sensor 75, the main control system 81 outputs a motor driving signal 81a, a PWM signal. A voltage comparator 92 employed in a motor-driving limiting means 90 compares the detection signal 70a output by the pedaling-force detecting means 70 to a threshold voltage VTH, outputting a motor-operation-permit / restriction-command signal 92a at a low level if the detection signal 70a is found smaller than the threshold voltage VTH, to limit the operation of a driving motor 21 by blocking the transmission of the motor driving signal 81a through an AND gate 93 with the pedals not being worked. The motor-driving limiting means 90 is provided independently of the main control system 81.

## Claims

1. An electrically assisted bicycle utilizing electric power output by a motor (21) as a supplement to human power serving as a driving force, said electrically assisted bicycle being equipped with:
a main control system (81) for controlling the operation of said motor (21) in accordance with information on a pedaling force output by a pedaling-force detecting means (70); and
a motor-driving limiting means (90) for limiting the operation of said motor (21) also in accordance with said information on said pedaling force output by said pedaling-force detecting means (70); said electrically assisted bicycle being characterized in that said motor-driving limiting means (90) is provided independently of said main control system (81) and limits the operation of said motor (21) when no pedaling force is applied.

## Patentansprüche

1. Elektrisch unterstütztes Fahrrad, welches die durch einen Motor (21) ausgegebene elektrische Leistung als eine Ergänzung zu menschlicher Leistung verwendet, welche als eine Antriebskraft dient, wobei das elektrisch unterstützte Fahrrad ausgestattet ist mit:
- einem Hauptsteuersystem (81) zum Steuern des Betriebs des Motors (21) in Übereinstimmung mit durch eine Tretkrafterfassungseinrichtung (70) ausgegebener Information über eine Tretkraft und
- eine Motorantriebsbegrenzungseinrichtung (90) zum Begrenzen des Betriebs des Motors (21) ebenfalls in Übereinstimmung mit der durch die Tretkrafterfassungseinrichtung (70) ausgegebenen Information über die Tretkraft,
wobei das elektrisch unterstützte Fahrrad dadurch gekennzeichnet ist, daß die Motorantriebsbegrenzungseinrichtung (90) unabhängig von dem Hauptsteuersystem (81) vorgesehen ist und den Betrieb des Motors (21) begrenzt, wenn keine Tretkraft ausgeübt wird.

## Revendications

1. Bicyclette assistée électriquement utilisant une puissance électrique fournie par un moteur (21) en tant que supplément d'une puissance humaine utilisée comme force motrice, ladite bicyclette assistée électriquement étant équipée :
d'un système (81) de commande principale pour commander le fonctionnement dudit moteur (21) en fonction d'informations concernant une force de pédalage fournies par des moyens (70) de détection de force de pédalage ; et
des moyens (90) de limitation de force motrice destinés à limiter l'action dudit moteur (21), également en fonction desdites informations concernant ladite force de pédalage fournies par lesdits moyens (70) de détection de force de pédalage ; ladite bicyclette assistée électriquement étant caractérisée en ce que
lesdits moyens (90) de limitation de force motrice sont utilisés indépendamment dudit système (81) de commande principale et limitent l'action dudit moteur (21) lorsque aucune force de pédalage n'est appliquée.
